# EUROPEAN PATENT APPLICATION

(11) **EP 4 597 664 A1**
(43) Date of publication of application: **06.08.2025**
(21) Application number: 23872081.7
(22) Date of filing: 20.09.2023
(51) Int. Cl.: H01M 10/052, H01M 50/403, H01M 50/414, H01M 50/434, H01M 50/443, H01M 50/446, H01M 50/451, H01M 50/463, H01M 50/489

(54) **LITHIUM SECONDARY BATTERY, SPACER FOR LITHIUM SECONDARY BATTERY, SPACER MATERIAL, AND INTEGRATED PRODUCT OF SEPARATOR AND SPACER FOR LITHIUM SECONDARY BATTERY**

(30) Priority: 29.09.2022 JP 2022156881
(71) Applicant: Panasonic Intellectual Property Management Co., Ltd., Kadoma-shi, Osaka 571-0057 (JP)
(72) Inventor: UTSUMIYA Kazutoshi, Osaka 571-0057 (JP)
(74) Representative: Eisenführ Speiser
(86) International application number: PCT/JP2023/034138
(87) International publication number: WO 2024/070854

(57) **Abstract**

Disclosed is a lithium secondary battery including: a positive electrode; a negative electrode; a porous separator disposed between the positive electrode and the negative electrode; a spacer disposed between the separator and at least one of the positive electrode and the negative electrode; and a non-aqueous electrolyte having lithium ion conductivity, wherein, on the negative electrode, lithium metal is deposited during charging, and the lithium metal is dissolved during discharging, the spacer includes insulating particles, a binder resin, and a thickener, the insulating particles have a median diameter in a volume-based particle size distribution, of 1.0 µm to 10 µm, the binder resin includes a polymer compound having a phthalic acid skeleton, and the thickener includes at least one selected from the group consisting of carboxymethyl cellulose and a carboxymethyl cellulose salt. Accordingly, it is possible to obtain a lithium secondary battery including a spacer with excellent physical properties.

## Description

### [Technical Field]

The present disclosure relates to a lithium secondary battery, a spacer for a lithium secondary battery, a spacer material, and an integrated product of a separator and a spacer for a lithium secondary battery.

### [Background Art]

A lithium ion battery is known as a non-aqueous electrolyte secondary battery having a high capacity. As a non-aqueous electrolyte secondary battery having a higher capacity than the lithium ion battery, a lithium secondary battery (lithium metal secondary battery) is promising. In the lithium secondary battery, lithium metal is deposited in a negative electrode during charging, and the lithium metal is dissolved during discharging and released as lithium ions into the non-aqueous electrolyte.

Patent Literature 1 proposes "A coating solution for a lithium ion battery separator that is used for producing a lithium ion battery separator comprising a substrate and a coating layer containing inorganic particles, wherein the coating solution comprises inorganic particles, an organic polymer binder and carboxymethyl cellulose having an etherification rate of 1.10 or more and 2.00 or less, or a salt thereof."

### [Citation List]

### [Patent Literature]

Patent Literature 1: WO 2019/146626

### [Summary of Invention]

### [Technical Problem]

In the lithium secondary battery, lithium metal is deposited on the negative electrode during charging, and the lithium metal is dissolved during discharging. Therefore, it is necessary to provide a spacer between the separator and the electrode to secure a space for lithium to be deposited. However, no material suitable for forming the spacer has been found. Accordingly, it is difficult to appropriately control the physical properties required for the spacer.

### [Solution to Problem]

An aspect of the present disclosure relates to a lithium secondary battery including: a positive electrode; a negative electrode; a porous separator disposed between the positive electrode and the negative electrode; a spacer disposed between the separator and at least one of the positive electrode and the negative electrode; and a non-aqueous electrolyte having lithium ion conductivity, wherein, on the negative electrode, lithium metal is deposited during charging, and the lithium metal is dissolved during discharging, the spacer includes insulating particles, a binder resin, and a thickener, the insulating particles have a median diameter in a volume-based particle size distribution, of 1.0 µm to 10 µm, the binder resin includes a polymer compound having a phthalic acid skeleton, and the thickener includes at least one selected from the group consisting of carboxymethyl cellulose and a carboxymethyl cellulose salt.

Another aspect of the present disclosure relates to a spacer for a lithium secondary battery and a spacer material, the spacer and the spacer material including: insulating particles; a binder resin; and a thickener, wherein the insulating particles have a median diameter in a volume-based particle size distribution, of 1.0 µm to 10 µm, the binder resin includes a polymer compound having a phthalic acid skeleton, the thickener includes at least one selected from the group consisting of carboxymethyl cellulose and a carboxymethyl cellulose salt.

Yet another aspect of the present disclosure relates to an integrated product of a separator and a spacer for a lithium secondary battery, the integrated product including: the above-described spacer; and a separator, wherein the spacer is bound to a surface of the separator.

### [Advantageous Effects of Invention]

According to the present disclosure, it is possible to obtain a lithium secondary battery including a spacer with excellent physical properties.

While the novel features of the invention are set forth in the appended claims, the invention, both as to organization and content, will be better understood and appreciated, along with other objects and features thereof, from the following detailed description taken in conjunction with the drawings.

### [Brief Description of Drawings]

[FIG. 1] A longitudinal cross-sectional view schematically showing an example of a lithium secondary battery according to an embodiment of the present disclosure.
[FIG. 2] A cross-sectional view schematically showing a portion of the lithium secondary battery shown in FIG. 1.
[FIG. 3] A top view showing an example of the pattern of a spacer.
[FIG. 4] A partial enlarged view of FIG. 3.
[FIG. 5] A top view showing another example of the pattern of the spacer.
[FIG. 6] A top view showing yet another example of the pattern of the spacer.
[FIG. 7] A top view showing still another example of the pattern of the spacer.

### [Description of Embodiments]

In the following, embodiments according to the present disclosure will be described by way of examples. However, the embodiments according to the present disclosure are not limited to the examples described below. Although examples of specific numerical values and materials may be given in the following description, other numerical values and materials may be used as long as the invention according to the present disclosure can be practiced. In the present specification, the expression "a numerical value A to a numerical value B" includes the numerical value A and the numerical value B, and can be replaced with "a numerical value A or more and a numerical value B or less." In the case where lower limits and upper limits are given as examples for numerical values relating to specific physical properties or conditions in the following description, any of the given lower limits and any of the given upper limits can be freely combined as long as the lower limit is not greater than or equal to the upper limit.

The present disclosure encompasses combinations of matters recited in two or more claims freely selected from a plurality of claims recited in the appended claims. That is, matters recited in two or more claims freely selected from a plurality of claims recited in the appended claims can be combined as long as there are no technical discrepancies.

### (Lithium Secondary Battery)

A lithium secondary battery is also called a lithium metal secondary battery. On the negative electrode of a battery of this type, lithium metal is deposited during charging, and the lithium metal is dissolved during discharging. Specifically, the negative electrode includes at least a negative electrode current collector, and the lithium metal is deposited on the negative electrode current collector.

For example, about 70% or more of the rated capacity of a lithium secondary battery is developed through deposition and dissolution of lithium metal. The transfer of electrons in the negative electrode during charging and discharging is mainly caused by deposition and dissolution of lithium metal on the negative electrode. Specifically, 70 to 100% (e.g., 80 to 100% or 90 to 100%) of the transfer of electrons (from another perspective, current) in the negative electrode during charging and discharging is caused by deposition and dissolution of lithium metal. That is, the negative electrode of the lithium secondary battery differs from a negative electrode in which the transfer of electrons in the negative electrode during charging and discharging is mainly caused by absorption and desorption of lithium ions by a negative electrode active material (e.g., graphite). In an example, the negative electrode does not include a negative electrode active material (graphite or the like) that absorbs and desorbs lithium ions.

A lithium secondary battery according to an embodiment of the present disclosure includes a positive electrode, a negative electrode, a porous separator disposed between the positive electrode and the negative electrode, a spacer disposed between the separator and at least one of the positive electrode and the negative electrode, and a non-aqueous electrolyte having lithium ion conductivity. On the negative electrode, lithium metal is deposited during charging, and the lithium metal is dissolved during discharging.

### (Spacer)

The spacer may be bound to one of the positive electrode, the negative electrode, and the separator. It is desirable that the spacer is bound to the separator in that the spacer can be handled more easily, and that an increase in the reaction resistance can be suppressed. The spacer according to an embodiment of the present disclosure may be formed by applying a dispersion including a spacer material to a surface of the positive electrode, the negative electrode, or the separator, and drying the dispersion.

In the following, a case where the spacer is bound to the separator will be described as an example. In a case where the spacer is bound to the positive electrode or the negative electrode, the separator is replaced with the positive electrode or the negative electrode, and the following description is applied thereto.

In the lithium secondary battery in which lithium metal is deposited on the negative electrode during charging, a space sufficient for lithium to be deposited needs to be secured between the separator and the electrode. For this purpose, the spacer needs to have a sufficient thickness. That is, one important physical property for the spacer to function as an excellent spacer is a physical property for securing a sufficient thickness. Usually, the larger the application area of the dispersion to the separator, the easier the thickness of the spacer can be increased. However, the larger the application area of the dispersion, the larger the internal resistance is. To form a spacer having a sufficient thickness while minimizing the application area of the dispersion, it is important to control, for example, the thixotropy of the dispersion.

Another important physical property for the spacer to function as an excellent spacer is the bonding strength between the spacer and the separator. To stably bind the spacer to the separator and reduce deformation or peeling due to deposition and dissolution of lithium metal, it is necessary to secure a sufficient bonding strength between the spacer and the separator. For this purpose, the spacer itself needs to have a sufficient mechanical strength.

To satisfy the physical properties as described above, the dispersion including the spacer material includes insulating particles, a binder resin, and a thickener. In other words, the spacer includes insulating particles, a binder resin, and a thickener. Examples of a dispersing medium of the dispersion that can be used include, but are not particularly limited to, water, an organic solvent, and a mixture of water and an organic solvent. Examples of the organic solvent that can be used include N-methyl-2-pyrrolidone (NMP). In particular, the use of water is desirable in that the environmental load can be reduced.

The shape of the insulating particles may be, but is not particularly limited to, a spherical shape. Note, however, that the spherical shape does not mean an exact spherical shape, but means a shape that has no sharp corners and has an aspect ratio (a maximum diameter/the largest diameter in a direction perpendicular to the maximum diameter) in the range from 1 to 3, for example. The insulating particles may have a median diameter (i.e., an average particle diameter) in a volume-based particle size distribution, of 1.0 µm to 10 µm. The median diameter is a particle diameter at a cumulative volume of 50%. The median diameter of the insulating particles may be 1.0 µm to 2 µm. The insulating particles need to be stably maintained in a dispersed state in the dispersion. When the median diameter is within the above-described range, the insulating particles in the dispersion are likely to be stably maintained in a dispersed state, and are also maintained in the dispersed state after being applied to the separator, resulting in formation of a spacer having a homogeneous morphology. As a result, the spacer can have a sufficient mechanical strength.

The median diameter in a volume-based particle size distribution of the insulating particles can be measured, for example, with a laser diffraction/scattering particle size distribution analyzer (e.g., Microtrack manufactured by NIKKISO CO., LTD.). Alternatively, the median diameter may be obtained by observing a cross section of the spacer with a transmission electron microscope (TEM), capturing a TEM image, calculating the area surrounded by the contours of arbitrarily selected 100 insulating particles, determining the diameter of an equivalent circle (perfect circle) having the same area as the calculated area, and determining an average value of the diameters of 100 equivalent circles as the median diameter.

The volume resistivity of the insulating particles may be, for example, 1.0 × 10⁸ Ω·cm or more. When the insulating particles have sufficient insulation properties, lithium metal is hardly deposited on the spacer, whereby the deposition of the lithium metal in the intended space is promoted. The volume resistivity of the insulating particles may be even larger, for example, 1.0 × 10¹⁰ Ω·cm or more.

The volume resistivity can be measured by a four probe method. For example, the insulating particles may be pressurized at 204 Kgf/cm², and the volume resistivity may be measured using a powder resistivity measurement device (e.g., Loresta-SP from Nittoseiko Analytech Co., Ltd.).

Examples of the insulating particles include inorganic particles of a metal oxide, a metal hydroxide, a metal nitride, a metal carbide, a metal sulfide, and the like. Examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals such as aluminosilicate, sheet silicate, barium titanate, and strontium titanate may be used. Among these, alumina, silica, titania, and the like are preferably used.

The content of the insulating particles in the spacer is, for example, less than 80 vol%, and desirably 50 to 70 vol%. The content (volume ratio) of the insulating particles in the spacer may be determined by observing a cross section of the spacer with a transmission electron microscope (TEM), capturing a TEM image, calculating the total area surrounded by the contours of the insulating particles with a given filed of view of 10 µm², and determining the volume ratio as the ratio of the total area of the calculated area to the area of the field of view. At this time, it is desirable to determine the volume ratios with three or more fields of view, and calculate an average value thereof.

Th binder resin includes a polymer compound having a phthalic acid skeleton. The type of the binder resin significantly affects, for example, the thickness of the spacer, the bonding strength between the spacer and the separator, and the mechanical strength of the spacer. The polymer compound having a phthalic acid skeleton may constitute 50 mass% or more of the binder resin, or may constitute 70 mass% or more, 80 mass% or more, or 90 mass% or more. The phthalic acid skeleton is represented by -O(O=C)-C₆H₄-(C=O)O-. In the polymer compound having a phthalic acid skeleton, the content of the phthalic acid skeleton may be, for example, 5 mass% to 95 mass%.

The polymer compound having a phthalic acid skeleton is synthesized, for example, by condensation polymerization between phthalic acid, which is polybasic acid, or a phthalic anhydride, and polyhydric alcohol. That is, an alkyd resin may be used as the polymer compound having a phthalic acid skeleton. Alkyd resins have excellent strength and ductility. The inclusion of the polymer compound having a phthalic acid skeleton in the binder resin of the spacer can be confirmed, for example, by analyzing the spacer by FT-IR, Raman spectroscopy, or the like.

Polyhydric alcohols that can be used include, but are not limited to, glycerin and pentaerythritol. A part of the phthalic acid or the phthalic anhydride may be replaced with a fatty acid such as linseed oil, soybean oil, or castor oil.

The weight-average molecular weight of the alkyd resin may be, but is not particularly limited to, for example, 10,000 to 1,000,000. For example, the weight-average molecular weight can be measured by gel permeation chromatography (GPC), and be determined in terms of polystyrene.

The amount of the binder resin may be, for example, 20 to 80 parts by volume, 20 to 70 parts by volume, 20 to 50 parts by volume, or 25 to 40 parts by volume, per 100 parts by volume of the insulating particles. The amount of the polymer compound having a phthalic acid skeleton may be, for example, 20 to 80 parts by volume, 20 to 70 parts by volume, 20 to 45 parts by volume, or 25 to 40 parts by volume, per 100 parts by volume of the insulating particles. In this range, the mechanical strength of the spacer is easily increased, and the bonding strength between the separator and the spacer can be easily increased.

The binder resin may be used in combination with a small amount (e.g., 30 mass% or less of the total binder resins) of other binder resins. The binder resin may include the polymer compound having a phthalic acid skeleton as a main component. Other binder resin may be used within a range that doe not significantly impair the actions and effects of the polymer compound having a phthalic acid skeleton. Examples of other binder resins include a fluorocarbon resin, a fluorine rubber, a styrene-butadiene copolymer or a hydride thereof, an acrylonitrile-butadiene copolymer or a hydride thereof, a methacrylic acid ester-acrylic acid ester copolymer, a styreneacrylic acid ester copolymer, an acrylonitrile-acrylic acid ester copolymer, an ethylene-propylene rubber, polyphenylene ether, polysulfone, polyether sulfone, polyphenylene sulfide, polyetherimide, polyimide, polyamide such as wholly aromatic polyamide (aramid), polyimide, polyamide imide, polyacrylonitrile, polyether, and polyolefin.

The thickener includes at least one selected from the group consisting of carboxymethyl cellulose and a carboxymethyl cellulose salt (hereinafter at least one selected from the group consisting of carboxymethyl cellulose and a carboxymethyl cellulose salt will also be referred to as "CMC"). In the case of using a carboxymethyl cellulose salt as the CMC, a sodium salt, a lithium salt, a potassium salt, an ammonium salt, and the like can be used. Among these, the carboxymethyl cellulose salt desirably include a sodium salt. The inclusion of the CMC in the spacer can be confirmed, for example, by analyzing the spacer by FT-IR, Raman spectroscopy, or the like. The spacer may be dissolved in water or the like and analyzed by GPC.

The CMC functions as a thickener for a dispersion of the spacer material that is prepared during a production process of the spacer. The CMC has good compatibility with the polymer compound having a phthalic acid skeleton serving as the binder resin, and is suitable to form a spacer having a high mechanical strength and an excellent bonding strength with the separator. It is difficult to sufficiently increase the mechanical strength of the spacer and the bonding strength with the separator by using a material having a thickening effect other than the CMC. The CMC is useful to enable the function of the polymer compound having a phthalic acid skeleton to be significantly achieved.

To allow the CMC to sufficiently fulfill its function, it is desirable that a dispersing medium of the dispersion of the spacer material includes water. Water may constitute 50 mass% or more of the dispersing medium, or water may constitute 70 mass% or more, 80 mass% or more, or 90 mass% or more of the dispersing medium.

The amount of the CMC may be, for example, 0.5 to 5 parts by volume, or 1 to 3 parts by volume, per 100 parts by volume of the insulating particles. Using the CMC within this range allows the thickening effect of the CMC to be sufficiently exhibited, and the effect of the polymer compound having a phthalic acid skeleton to be significantly achieved.

When the spacer is bound to the separator, the bonding strength between the spacer and the separator is, for example, desirably 20 N/m or more. This allows the spacer to be bound to the separator more stably, and significantly reduces deformation or peeling due to deposition and dissolution of the lithium metal.

The bonding strength between the spacer and the separator can be determined by performing a peel test using a measurement apparatus compliant with JIS Z 0237 (2009). First, a material constituting the spacer is identified, and a dispersion of the spacer material is prepared. The dispersion is applied to a surface of the separator, and dried to form a sample of a laminate of the spacer material film and the separator. The thickness of the spacer material film is 10 µm, and the sample has a band shape having a width of 10 mm × a length of 50 mm or more. One side of a double-sided tape (e.g., No. 5606 manufactured by Nitto Denko Corporation) having a width of 20 mm × a length 130 mm is attached to the separator side of the sample, and the other side of the double-sided tape is attached to a flat surface of a horizontal table. One end of the spacer material film in the length direction is fixed by a force gage and pulled in the vertical direction at a rate of 50 mm/min, to peel off the spacer material film from the separator attached to the double-sided tape. The tension at that time is measured for 15 seconds or more, and the average tension for the 15-second continuous interval is calculated as the bonding strength between the spacer and the separator.

The thickness of the spacer is, for example, desirably 20 µm or more, and may be 25 µm or more, or 30 µm or more. The thickness of the spacer refers to a maximum dimension of the spacer in the thickness direction of the separator. The thickness of the spacer is determined by capturing an image of a cross section of the separator in the thickness direction using a scanning electron microscope (SEM), measuring the thickness of the spacer at arbitrarily selected 10 locations, and determining an average value thereof. A spacer having an excessively large thickness may affect the capacity of the lithium secondary battery. The thickness of the spacer is, for example, 100 µm, and may be 80 µm or less, or 60 µm or less.

A first region facing the spacer and a second region not facing the spacer are present on the surface of the separator. When the spacer is thin and has a small accommodation space for lithium metal, a considerable amount of lithium metal is deposited in the vicinity of the spacer. The deposition of the lithium metal is likely to be significant at a boundary portion between the first region and the second region. On the other hand, the deposition of the lithium metal at the boundary portion between the first region and the second region can be suppressed by increasing the thickness of the spacer to 20 µm or more. The reason for this is that a sufficient accommodation space for the lithium metal is secured in the second region when the thickness of the spacer is sufficiently large. Accordingly, the spacer is less likely to receive stress from the deposited lithium metal.

From the viewpoint of increasing the mechanical strength of the spacer, it is desirable that the spacer has a non-porous structure. The non-porous structure refers to a dense structure. In other words, the porosity of the spacer is desirably as small as possible. The porosity of the spacer may be 10 vol% or less, or 5 vol% or less.

The porosity of the spacer can be determined by capturing an image of a cross section of the spacer in the thickness direction of the separator using a scanning electron microscope (SEM), performing image processing such as binarization on the captured image with a given field of view of 10 µm², differentiating between pore portions A and portions B other than the pore portions A, and determining the area ratio of the pore portions A to the total area of the pore portions A and the portions B. Desirably, the captured image is measured at arbitrarily selected 10 locations, and the porosity (vol%) of the spacer is determined as an average value of the area ratios of the pore portions A determined at the 10 locations.

The area ratio of the first region of the separator that faces the spacer to the sum of the first region and the second region of the separator that does not face the spacer may be, for example, 30% or less, 5 to 30%, or 5 to 20%. In this case, the internal resistance can be controlled in a proper range. The larger the area ratio of the first region, the larger the amount of deposition of the lithium metal per unit area in the second region is. Accordingly, the deposition of the lithium metal in the thickness direction is promoted, and lithium metal in an isolated state is likely to be generated. Such lithium metal in an isolated state can be more easily reduced by controlling the area ratio of the first region in the above-described range.

The shape in a plan view of the spacer may be at least one of a shape of lines and a shape of dots that are arranged in a predetermined pattern. That is, the spacer may include linear protrusions arranged so as to depict a predetermined pattern, or may include dot-like (island-like) protrusions. The spacer may be composed only of the linear protrusions or the dot-like protrusions, or may be composed of both the linear protrusions and the dot-like protrusions. The planar shape of the dot-like protrusions is not particularly limited, and may be a circular shape (a perfect circular shape or an oval shape), a polygonal shape (a triangular shape, a quadrangular shape, etc.).

A plan view means viewing an object placed on a flat surface from the direction of the normal of the surface. For example, a plan view of the spacer formed on the separator means that the separator is placed on a flat surface, and the spacer is viewed from the direction of the normal of the surface.

It is desirable that the first region facing the spacer is disposed on the separator in a state as uniform and dispersed as possible. This makes it possible to reduce the locations where the lithium metal may be locally deposited in a large amount, and limit the lithium metal in an isolated state to a minimum, while suppressing an increase in the internal resistance. Usually, the separator, the positive electrode, and the negative electrode each have a band shape having longer sides and shorter sides. When L represents the length (width) of the band-shaped negative electrode in the shorter direction, and a given circular region having a diameter of S/3 is set on a surface of the separator, it is desirable that the first region and the second region coexist in such a circular region.

Specifically, the predetermined pattern may be a mesh pattern. The mesh pattern may be a pattern of a set of polygons, and may be, for example, a honeycomb pattern, which is a pattern of a set of hexagons.

Hereinafter, each of the constituent elements of the lithium secondary battery will be described in further detail.

### (Separator)

For the separator, a porous sheet having ion permeability and insulating properties is used. Examples of the porous sheet include a microporous thin film, a woven fabric, and a nonwoven fabric. The material of the separator may be, but is not particularly limited to, a polymer material. Examples of the polymer material include an olefin resin, a polyamide resin, and cellulose. Examples of the olefin resin include polyethylene, polypropylene, and a copolymer of ethylene and propylene. The separator may include an additive as needed. Examples of the additive include an inorganic filler. In the case where the spacer is bound to the surface of the separator, the separator and the spacer can be handles as an integrated product.

The separator has a first principal surface facing the negative electrode, and a second principal surface facing the positive electrode. The spacer may be formed on the first principal surface, or may be formed on the second principal surface.

The thickness of the separator is, but is not particularly limited to, for example, 5 µm or more and 20 µm or less, and more preferably 10 µm or more and 20 µm or less.

The separator may include a porous sheet (substrate layer) and a composite material layer. The composite material layer may be formed on the first principal surface side of the porous sheet, or may be formed on the second principal surface side thereof. In the case where the composite material layer is provided, the thickness of the composite material layer may be 5% to 50% of the thickness of the separator.

The composite material layer includes a resin material and inorganic particles. The inorganic particles may include first particles and/or second particles. The first particles are particles of phosphate containing lithium. The second particles are particles other than the first particles. The composite material layer is a layer that allows lithium ions to permeate therethrough.

Disposing the composite material layer on the positive electrode side can suppress degradation of the porous sheet due to oxidation reaction. On the other hand, disposing the composite material layer on the negative electrode side can suppress degradation of the porous sheet due to reduction reaction.

The phosphate constituting the first particles may be at least one selected from the group consisting of lithium phosphate (Li₃PO₄), dilithium hydrogen phosphate (Li₂HPO₄), and lithium dihydrogen phosphate (LiH₂PO₄). Among these, lithium phosphate is preferred because of the high effect of suppressing heat generation in the battery in an abnormal state.

As the resin material, it is desirable to use a polymer material having higher heat resistance than the material of the porous sheet. Such a polymer material preferably includes at least one selected from the group consisting of aromatic polyamide, aromatic polyimide, and aromatic polyamide imide. These are known as polymer materials having high heat resistance. In terms of the heat resistance, aramid, i.e., meta-type aramid (meta-type wholly aromatic polyamide) and para-type aramid (para-type wholly aromatic polyamide) are preferred.

The median diameter (i.e., the average particle diameter) in a volume-based particle size distribution of the first particles may be 0.1 µm to 1.0 µm. The median diameter (i.e., the average particle diameter) in a volume-based particle size distribution of the second particles may be 0.2 to 2.0 µm.

### (Negative Electrode)

The negative electrode includes a negative electrode current collector. In the lithium secondary battery, lithium metal is deposited on a surface of the negative electrode as a result of charging. More specifically, as a result of charging, lithium ions included in the non-aqueous electrolyte receive electrons on the negative electrode to form lithium metal, and the lithium metal is deposited on the surface of the negative electrode. The lithium metal deposited on the surface of the negative electrode is dissolved as lithium ions in the non-aqueous electrolyte as a result of discharging. The lithium ions included in the non-aqueous electrolyte may be lithium ions derived from a lithium salt added in the non-aqueous electrolyte, or lithium ions supplied from the positive electrode active material as a result of charging, or may be both of theses.

The negative electrode may include a lithium ion absorption layer (layer that develops a capacity through absorption and desorption of lithium ions by the negative electrode active material (graphite or the like)) supported on the negative electrode current collector. In this case, the open circuit potential of the negative electrode in a fully charged state may be 70 mV or less with respect to the lithium metal (dissolution/deposition potential of lithium). When the open circuit potential of the negative electrode in a fully charged state is 70 mV or less with respect to the lithium metal, the lithium metal is present on the surface of the lithium ion absorption layer in a fully charged state. That is, the negative electrode develops a capacity due to the deposition and dissolution of the lithium metal.

Here, a fully charged state refers to a state in which, when C represents the rated capacity of a battery, the battery is charged to a state of charge of, for example, 0.98 × C or more. The open circuit potential of a negative electrode in a fully charged state may be measured by disassembling the fully charged battery under an argon atmosphere, removing the negative electrode, and assembling a cell using lithium metal as a counter electrode. The non-aqueous electrolyte of the cell may have the same composition as that of the non-aqueous electrolyte included in the disassembled battery.

The lithium ion absorption layer is a layer formed by a negative electrode mixture including the negative electrode active material. The negative electrode mixture may include, in addition to the negative electrode active material, a binder, a thickener, a conductive agent, and so forth.

Examples of the negative electrode active material include a carbonaceous material, a Sicontaining material, and a Sn-containing material. The negative electrode may include one negative electrode active material, or may include two or more negative electrode active materials in combination. Examples of the carbonaceous material include graphite, graphitizable carbon (soft carbon), and non-graphitizable carbon (hard carbon).

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubber-like polymer. Examples of the fluorocarbon resin include polytetrafluoroethylene and polyvinylidene fluoride.

The negative electrode current collector may be any conductive sheet. A foil, a film, or the like can be used as the conductive sheet.

The material of the negative electrode current collector (conductive sheet) may be any conductive material other than lithium metal and a lithium alloy. The conductive material may be a metal material such as a metal and an alloy. The conductive material is preferably a material that does not react with lithium. More specifically, the conductive material is preferably a material that forms neither an alloy nor an intermetallic compound with lithium. Such a conductive material may be, for example, copper (Cu), nickel (Ni), iron (Fe), and alloys including these metal elements, or graphite whose basal surface is exposed preferentially. Examples of the alloys includes a copper alloy and stainless steel (SUS). Among these, copper and/or a copper alloy having high conductivity is preferred.

The thickness of the negative electrode current collector is not particularly limited, and is, for example, 5 µm or more and 300 µm or less.

### (Positive Electrode)

The positive electrode includes, for example, a positive electrode current collector, and a positive electrode mixture layer supported on the positive electrode current collector. The positive electrode mixture layer includes, for example, a positive electrode active material, a conductive material, and a binder. The positive electrode mixture layer may be formed on only one side of the positive electrode current collector, or may be formed on both sides thereof. The positive electrode can be obtained, for example, by applying a positive electrode mixture slurry including the positive electrode active material, the conductive material, and the binder to both sides of the positive electrode current collector, and drying the resulting coatings, followed by rolling.

The positive electrode active material is a material that absorbs and desorbs lithium ions. Examples of the positive electrode active material include a lithium-containing transition metal oxide, a transition metal fluoride, a polyanion, a fluorinated polyanion, and a transition metal sulfide. Among these, a lithium-containing transition metal oxide is preferred because of the low manufacturing cost and the high average discharge voltage.

During charging, the lithium contained in the lithium-containing transition metal oxide is released as lithium ions from the positive electrode, and deposited as lithium metal in the negative electrode or the negative electrode current collector. During discharging, the lithium metal is dissolved from the negative electrode to release the lithium ions, which are then absorbed in a composite oxide in the positive electrode. That is, the lithium ions involved in charging and discharging are substantially derived from a solute contained in the non-aqueous electrolyte and the positive electrode active material.

Transition metal elements included in the lithium-containing transition metal oxide include Sc, Ti, V, Cr, Mn, Fe, Co, Ni, Cu, Y, Zr, and W. The lithium-containing transition metal oxide may include one transition metal element, or may include two or more transition metal elements. The transition metal element may be Co, Ni and/or Mn. The lithium-containing transition metal oxide may include one or more typical elements as needed. Examples of the typical element include Mg, Al, Ca, Zn, Ga, Ge, Sn, Sb, Pb, and Bi. The typical element may be Al or the like.

From the viewpoint of achieving a high capacity, preferred among the lithium-containing transition metal oxides is a composite oxide that includes Co, Ni and/or Mn as transition metal elements, may include Al as an optional component, and has a layered rock-salt crystal structure having a layered structure. In this case, in the lithium secondary battery, a molar ratio: mLi/mM of a total amount mLi of the lithium included in the positive electrode and the negative electrode, and an amount mM of a metal M other than the lithium included in the positive electrode is set to, for example, 1.1 or less.

As the binder, the conductive agent, and the like, those illustrated for the negative electrode can be used. The shape and the thickness of the positive electrode current collector can be respectively selected from the shapes and the ranges corresponding to the positive electrode current collector.

Examples of the material of the positive electrode current collector (conductive sheet) include metal materials including Al, Ti, Fe, and the like. The metal materials may be Al, an Al alloy, Ti, a Ti alloy, an Fe alloy, and the like. The Fe alloy may be stainless steel (SUS).

The thickness of the positive electrode current collector is not particularly limited, and is, for example, 5 µm or more and 300 µm or less.

### (Non-Aqueous Electrolyte)

The non-aqueous electrolyte having lithium ion conductivity includes, for example, a non-aqueous solvent, and lithium ions and anions dissolved in the non-aqueous solvent. The non-aqueous electrolyte may be in the form of liquid or gel.

The non-aqueous electrolyte in the form of liquid is prepared by dissolving a lithium salt in the non-aqueous solvent. As a result of the lithium salt being dissolved in the non-aqueous solvent, lithium ions and anions are generated.

The non-aqueous electrolyte in the form of gel includes a lithium salt and a matrix polymer, or a lithium salt, a non-aqueous solvent, and a matrix polymer. For example, a polymer material that absorbs and gelatinizes the non-aqueous solvent is used as the matrix polymer. Examples of the polymer material include a fluorocarbon resin, an acrylic resin, and a polyether resin.

As the lithium salt or the anions, those known to be used for non-aqueous electrolytes of lithium secondary batteries can be used. Specific examples thereof include BF₄⁻, ClO₄⁻, PF₆⁻, CF₃SO₃⁻, CF₃CO₂⁻, imide anions, and oxalate complex anions. Examples of the imide anions include N(SO₂CF₃)₂⁻, N(CₘF₂ₘ₊₁SO₂)ₓ(CₙF₂ₙ₊₁SO₂)y⁻ (where m and n are each independently an integer of 0 or 1 or more, x and y are each independently 0, 1, or 2, and x + y = 2 is satisfied). The oxalate complex anions may contain boron and/or phosphorus. Examples of the oxalate complex anions include a bis(oxalate)borate anion, a difluoro(oxalate)borate anion (BF₂(C₂O₄)⁻), PF₄(C₂O₄)⁻, and PF₂(C₂O₄)₂⁻. The non-aqueous electrolyte may include one kind of these anions alone, or may include two or more kinds thereof.

From the viewpoint of suppressing dendritic deposition of lithium metal, the non-aqueous electrolyte preferably includes at least an oxalate complex anion, and in particular, desirably includes the oxalate complex anion including fluorine. Through interaction between lithium and an oxalate complex anion including fluorine, lithium metal can be easily deposited in the form of fine particles in a uniform manner. Accordingly, the local deposition of lithium metal can be easily suppressed. The oxalate complex anion including fluorine may be combined with other anions. Other anions may be PF₆⁻and/or imide anions.

Examples of the non-aqueous solvent include an ester, an ether, a nitrile, an amide, or halogen-substituted products thereof. The non-aqueous electrolyte may include one of these non-aqueous solvents alone, or may include two or more of them. Examples of the halogen-substituted products include a fluoride.

Examples of the ester include a carbonic acid ester and a carboxylic acid ester. Examples of the cyclic carbonic acid ester include ethylene carbonate, propylene carbonate, and fluoroethylene carbonate (FEC). Examples of the chain carbonic acid ester include dimethyl carbonate (DMC), ethyl methyl carbonate (EMC), and diethyl carbonate. Examples of the cyclic carboxylic acid ester include γ-butyrolactone and γ-valerolactone. Examples of the chain carboxylic acid ester include ethyl acetate, methyl propionate, and methyl fluoropropionate.

Examples of the ether include a cyclic ether and a chain ether. Examples of the cyclic ether include 1,3-dioxolane, 4-methyl-1,3-dioxolane, tetrahydrofuran and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be 0.5 mol/L or more and 3.5 mol/L or less. The concentration of the oxalate complex anions in the non-aqueous electrolyte may be 0.05 mol/L or more and 1 mol/L or less.

The non-aqueous electrolyte may include an additive. The additive may form a film on the negative electrode. As a result of a film derived from the additive being formed on the negative electrode, production of dendrites can be easily suppressed. Examples of such an additive include vinylene carbonate, FEC, and vinyl ethyl carbonate (VEC).

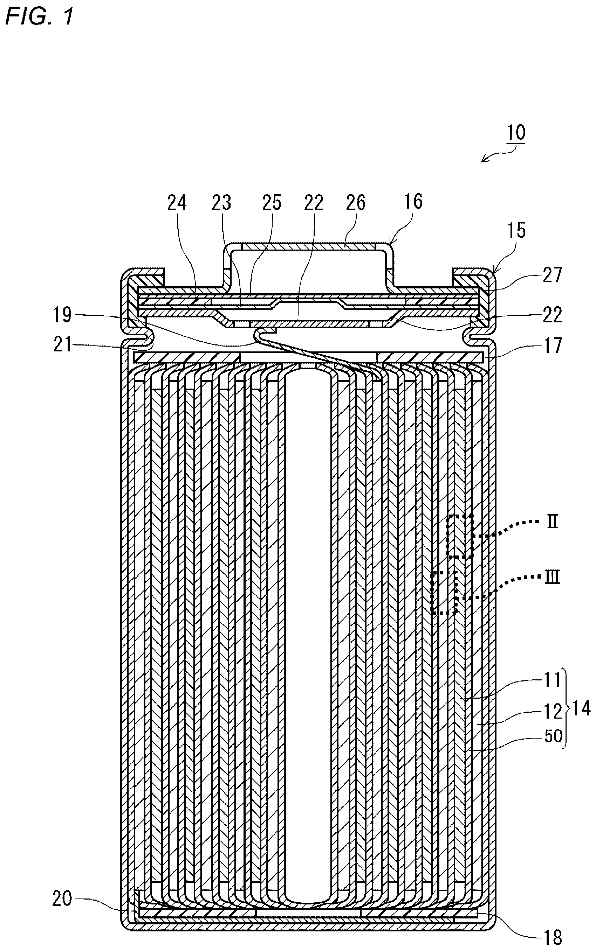

In the following, a description will be given with reference to the drawings. FIG. 1 is a vertical cross-sectional view schematically showing an example of a lithium secondary battery according to an embodiment of the present disclosure.

In the following, an example of a lithium secondary battery (L) according to the present embodiment will be described in detail with reference to the drawings. The above-described constituent elements can be applied to the constituent elements of the lithium secondary battery in the example described below. The constituent elements in the example described below can be changed based on the above descriptions. The matters described below may be applied to the above-described embodiment. In the lithium secondary battery described below, constituent elements that are not essential to the lithium secondary battery according to the present disclosure may be omitted. Note that, in the following drawings, the scale of the constituent elements has been changed in order to facilitate understanding.

In the following, a positive electrode, a negative electrode, and a separator may be collectively referred to as an "electrode group". The positive electrode, the negative electrode, and the separator may be wound such that the separator is disposed between the positive electrode and the negative electrode. A band-shaped positive electrode, a band-shaped negative electrode, and a band-shaped separator are used in the case of forming a wound electrode group. Alternatively, the positive electrode, the negative electrode, and the separator may be stacked. For example, a flat positive electrode, a flat negative electrode, and a flat separator may be stacked. That is, electrode group may be a wound electrode group or a stacked electrode group.

### (Embodiment 1)

FIG. 1 is a vertical cross-sectional view schematically showing an example of a lithium secondary battery according to Embodiment 1. In FIG. 1, the illustration of a spacer, and a space defined by the spacer has been omitted. A cylindrical lithium secondary battery 10 shown in FIG. 1 includes a cylindrical battery case, and a wound electrode group 14 and a non-aqueous electrolyte (not shown) that are accommodated inside the battery case. The battery case includes a case body 15, which is a bottomed cylindrical container made of metal, and a sealing body 16 that seals an opening of the case body 15. A gasket 27 is disposed between the case body 15 and the sealing body 16. The gasket 27 ensures the sealing of the battery case. Inside the case body 15, insulating plates 17 and 18 are disposed at opposite ends, respectively, in the direction of the winding axis of the electrode group 14.

The case body 15 includes a stepped part 21 formed, for example, by pressing a portion of a side wall of the case body 15 from outside. The stepped part 21 may be formed in an annular shape on the side wall of the case body 15 along the circumferential direction of the case body 15. In this case, the sealing body 16 is supported by a surface of the stepped part 21 that is located on the opening side.

The sealing body 16 includes a filter 22, a lower valve body 23, an insulating member 24, an upper valve body 25, and a cap 26. In the sealing body 16, these members are stacked in this order. The sealing body 16 is mounted to the opening of the case body 15 such that the cap 26 is located outside of the case body 15, and the filter 22 is located inside of the case body 15. Each of the members constituting the sealing body 16 has, for example, a disk shape or a ring shape. The lower valve body 23 and the upper valve body 25 are connected to each other at their respective central portions, and the insulating member 24 is interposed between their respective peripheral edges. The filter 22 and the lower valve body 23 are connected to each other at their respective central portions. The upper valve body 25 and the cap 26 are connected to each other at their respective central portions. That is, the members other than the insulating member 24 are electrically connected to each other.

A ventilation hole (not shown) is formed in the lower valve body 23. Accordingly, when the internal pressure of the battery case is increased due to abnormal heat generation or the like, the upper valve body 25 bulges toward the cap 26 and moves away from the lower valve body 23. This interrupts the electrical connection between the lower valve body 23 and the upper valve body 25. When the internal pressure is further increased, the upper valve body 25 breaks, allowing gas to be discharged from an opening (not shown) formed in the cap 26.

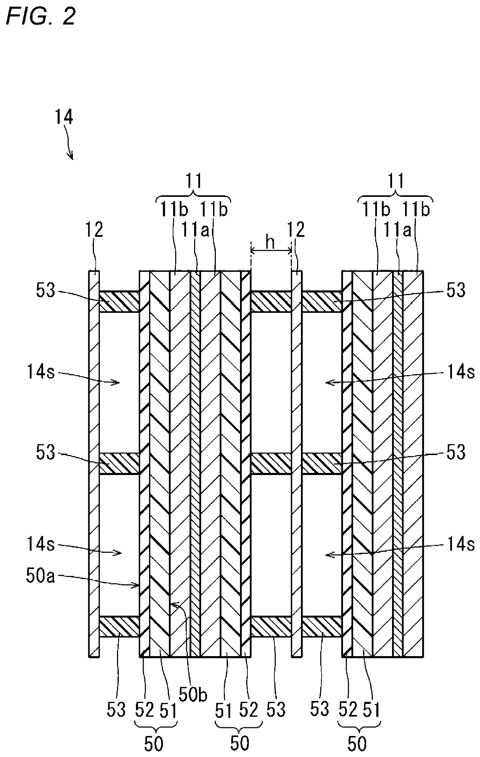

FIG. 2 is a cross-sectional view schematically showing a portion of the lithium secondary battery shown in FIG. 1. FIG. 2 is an enlarged view of a portion of the electrode group 14. FIG. 2 includes a portion located in the vicinity of the positive electrode and surrounded by region II in FIG. 1, and a portion located in the vicinity of the negative electrode and surrounded by region III in FIG. 1.

The electrode group 14 includes a positive electrode 11, a negative electrode 12, a separator 50, and a spacer 53. Here, a case is shown where the separator 50 includes a porous sheet (substrate layer) 51 and a composite material layer 52. However, the composite material layer 52 may be omitted. All of the positive electrode 11, the negative electrode 12, and the separator 50 are band-shaped. The spacer 53 is formed on the composite material layer 52 of the separator 50. The electrode group 14 is formed by winding the positive electrode 11, the negative electrode 12, and the separator 50 such that the separator 50 is disposed between the positive electrode 11 and the negative electrode 12.

The positive electrode 11 includes a positive electrode current collector 11a and a positive electrode mixture layer 11b. The positive electrode current collector 11a is electrically connected to the cap 26, which functions as a positive electrode terminal, via a positive electrode lead 19. In FIG. 2, a negative electrode (negative electrode current collector) in a state in which lithium metal has not been deposited is shown as the negative electrode 12. The negative electrode 12 is electrically connected to the case body 15, which functions as a negative electrode terminal, via a negative electrode lead 20.

As shown in FIG. 2, the separator 50 has a first principal surface 50a facing the negative electrode 12, and a second principal surface 50b facing the positive electrode 11. In the example shown in FIG. 2, the spacer 53 is formed on the first principal surface 50a.

In Embodiment 1, the composite material layer 52 is formed on one of two principal surfaces of the porous sheet 51 that is located on the negative electrode 12 side. The spacer 53 is formed on the composite material layer 52, and is in contact with the negative electrode 12. The spacer 53 defines spaces 14s between the positive electrode 11 and the negative electrode 12 (between the negative electrode 12 and the separator 50). FIG. 2 shows a thickness (height) h of the spacer 53.

In the lithium secondary battery 10, lithium metal is deposited on the negative electrode 12 during charging. Since the spaces 14s exist between the positive electrode 11 and the negative electrode 12, the volume change of the electrode group 14 due to the deposition of the lithium metal is reduced, resulting in improved cycle characteristics.

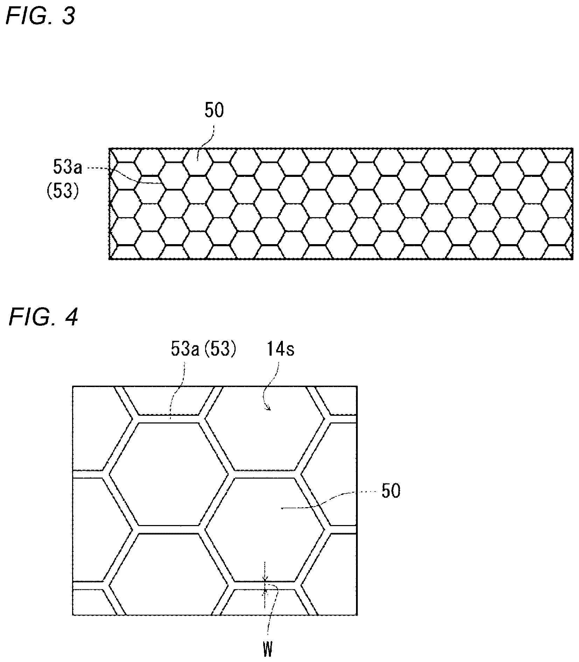

FIG. 3 shows an example of a shape pattern (planar shape) of the spacer 53, and FIG. 4 shows a partial enlarged view of FIG. 3. In the example shown in FIG. 3, the spacer 53 is constituted by linear protrusions 53a. The linear protrusions 53a are arranged in a mesh, and more specifically, are uniformly formed in a honeycomb pattern. The honeycomb pattern is a pattern of a plurality of hexagons arranged so as to share sides with each other. The regions in which no linear protrusions 53a are formed define the spaces 14s. FIG. 4 shows a width W of the linear protrusions 53a. The width W of the linear protrusions is the length (width) of the linear protrusions 53a in a direction perpendicular to the direction of extension of the linear protrusions 53a in a plan view. In a plan view, the shortest distance from a given point on the spacer to an outer edge of the spacer is, for example, less than 1.5 mm, and the width of the spacer may be, for example, 0.01 mm or more.

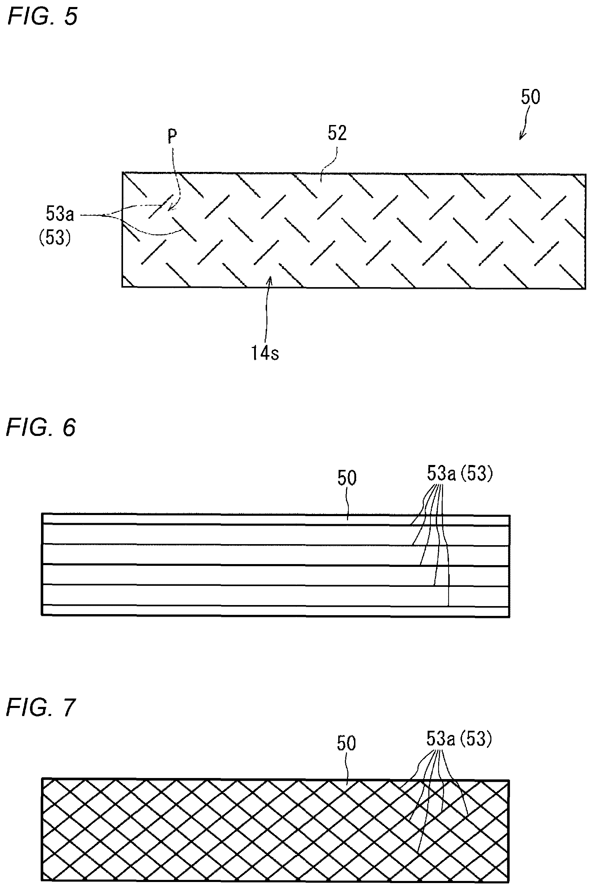

FIGS. 5 to 7 show other examples of a shape pattern (planar shape) of the spacer 53. Note that FIGS. 3 to 7 are diagrams showing the separator 50 and the spacer 53 as viewed in a plan view. The spacer 53 shown in FIG. 5 includes a plurality of linear protrusions 53a spaced apart from each other. Gaps P exist between the linear protrusions 53a. The regions in which no linear protrusions 53a are formed define the spaces 14s. The spacer 53 shown in FIG. 6 includes a plurality of linear protrusions 53a arranged in stripes. The spacer 53 shown in FIG. 7 includes a plurality of linear protrusions 53a arranged in a grid.

Embodiment 1 has described a cylindrical lithium secondary battery including a wound electrode group. However, the lithium secondary battery according to the present embodiment is not limited to the configuration of Embodiment 1, and can be applied to other configurations. The shape of the lithium secondary battery can be appropriately selected from various shapes such as a cylindrical shape, a coin shape, a prismatic shape, a sheet shape, and a flat shape according to the use and the like. The configuration of the electrode group is also not particularly limited, and the electrode group may be a stacked electrode group.

### (Supplementary Note)

The above description of the embodiments discloses the following techniques.

### (Technique 1)

A lithium secondary battery including:
a positive electrode;
a negative electrode;
a porous separator disposed between the positive electrode and the negative electrode;
a spacer disposed between the separator and at least one of the positive electrode and the negative electrode; and
a non-aqueous electrolyte having lithium ion conductivity, wherein,
on the negative electrode, lithium metal is deposited during charging, and the lithium metal is dissolved during discharging,
the spacer includes insulating particles, a binder resin, and a thickener,
the insulating particles have a median diameter in a volume-based particle size distribution, of 1.0 µm to 10 µm,
the binder resin includes a polymer compound having a phthalic acid skeleton, and
the thickener includes at least one selected from the group consisting of carboxymethyl cellulose and a carboxymethyl cellulose salt.

### (Technique 2)

The lithium secondary battery according to technique 1, wherein the spacer is bound to the separator.

### (Technique 3)

The lithium secondary battery according to technique 2, wherein a bonding strength between the spacer and the separator is 20 N/m or more.

### (Technique 4)

The lithium secondary battery according to technique 1 or 2, wherein the spacer has a thickness of 20 µm or more.

### (Technique 5)

The lithium secondary battery according to any one of techniques 1 to 3, wherein the polymer compound is an alkyd resin.

### (Technique 6)

The lithium secondary battery according to any one of techniques 1 to 5, wherein the polymer compound (or the alkyd resin) has a weight-average molecular weight of 10,000 to 1,000,000.

### (Technique 7)

The lithium secondary battery according to any one of techniques 1 to 6, wherein a content of the insulating particles in the spacer is less than 80 vol%.

### (Technique 8)

The lithium secondary battery according to any one of techniques 1 to 7, wherein the spacer has a non-porous structure.

### (Technique 9)

The lithium secondary battery according to any one of techniques 1 to 8, wherein with respect to a sum of a first region of the separator that faces the spacer and a second region of the separator that does not face the spacer, an area ratio of the first region is 30% or less.

### (Technique 10)

The lithium secondary battery according to any one of techniques 1 to 9, wherein a shape in a plan view of the spacer is at least one of a shape of lines and a shape of dots that are arranged in a predetermined pattern.

### (Technique 11)

The lithium secondary battery according to any one of techniques 1 to 10, wherein the pattern is a mesh pattern.

### (Technique 12)

A spacer for a lithium secondary battery and a spacer material, the spacer and the spacer material including:
insulating particles; a binder resin; and a thickener, wherein
the insulating particles have a median diameter in a volume-based particle size distribution, of 1.0 µm to 10 µm,
the binder resin includes a polymer compound having a phthalic acid skeleton,
the thickener includes at least one selected from the group consisting of carboxymethyl cellulose and a carboxymethyl cellulose salt.

### (Technique 13)

An integrated product of a separator and a spacer for a lithium secondary battery, the integrated product including:
the spacer according to technique 12; and a separator, wherein
the spacer is bound to a surface of the separator.

### [Examples]

Hereinafter, the lithium secondary battery according to the present disclosure will be described in further detail by way of examples and comparative examples. However, the present disclosure is not limited to the following examples.

### <<Example 1>>

### (1) Production of Positive Electrode

A rock-salt type lithium-containing transition metal oxide (NCA: positive electrode active material) containing Li, Ni, Co, and Al (the molar ratio of Li to the sum of Ni, Co, and Al was 1.0) and having a layered structure, acetylene black (AB; conductive material), and polyvinylidene fluoride (PVdF; binder) were mixed at a mass ratio of NCA:AB:PVdF = 95:2.5:2.5, and an appropriate amount of N-methyl-2-pyrrolidone (NMP) was further added thereto, followed by stirring, to prepare a positive electrode mixture slurry. The resulting positive electrode mixture slurry was applied to both sides of a band-shaped Al foil (positive electrode current collector), followed by drying, and the resulting coatings of the positive electrode mixture were rolled with rollers. Finally, the resulting laminate of the positive electrode current collector and the positive electrode mixture was cut into a predetermined electrode size, to obtain a positive electrode including the positive electrode mixture layers on both sides of the positive electrode current collector.

### (2) Production of Negative Electrode

A band-shaped electrolytic copper foil (thickness: 15 µm) was prepared as a negative electrode current collector.

### (3) Separator

A polyethylene separator (microporous thin film) having a thickness of 20 µm was prepared.

### (4) Formation of Spacer

Sixty parts by volume of insulating particles (median diameter: 3 µm, volume resistivity: 10¹⁴ Q.cm), 39 parts by volume of an alkyd resin (weight-average molecular weight: 10,000 to 1,0000,000) serving as a binder resin, 1 part by volume of CMC (sodium salt), and water serving as a dispersing medium were mixed to prepare a dispersion of a spacer material.

Next, using a dispenser, the dispersion of the spacer material was delivered onto the separator so as to form a striped pattern shown in FIG. 6. Thereafter, the resulting coating was vacuum dried. In this manner, a striped spacer having a non-porous structure shown in FIG. 6 was formed. At this time, each of the linear protrusions was formed so as to have a width W of 0.01 mm. The ratio of the area of the first region of the separator that faced the spacer to the total area of the first region of the separator and the second region that did not face the spacer of the separator was 20%.

### (5) Preparation of Non-Aqueous Electrolyte

Ethylene carbonate (EC) and dimethyl carbonate (DMC) were mixed at a volume ratio EC:DMC = 30:70, and LiPF₆ at a configuration of 1 mol/L and LiBF₂(C₂0₄) at a concentration of 0.1 mol/L were each dissolved in the resulting solvent mixture, to prepare a liquid non-aqueous electrolyte.

### (6) Assembly of Battery

In an inert gas atmosphere, the positive electrode and the negative electrode were spirally wound with the above-described separator interposed therebetween, to produce a wound electrode group. At this time, the separator was disposed such that the spacer faced the negative electrode. The electrode group was accommodated in a bag-shaped exterior member formed of a laminate sheet including an Al layer, and the above-described non-aqueous electrolyte was injected therein, followed by sealing the exterior member to complete a lithium secondary battery A1.

### <<Comparative Example 1>>

A lithium secondary battery B 1 was produced in the same manner as in Example 1 except that, in Formation of Spacer (4), the dispersion of the spacer material was prepared by mixing 60 parts by mass of the insulating particles, 40 parts by mass of the CMC, and water serving as a dispersing medium, without using the alkyd resin.

### <<Comparative Example 2>>

A lithium secondary battery B2 was produced in the same manner as in Example 1 except that, in Formation of Spacer (4), the dispersion of the spacer material was prepared by mixing 60 parts by mass of the insulating particles, 40 parts by mass of an alkyd resin, and water serving as a dispersing medium, without using the CMC.

### <<Comparative Example 3>>

A lithium secondary battery B3 was produced in the same manner as in Example 1 except that, in Formation of Spacer (4), a polyester resin (epoxy-based polyester) without a phthalic acid skeleton was used in place of the alkyd resin.

### <<Comparative Example 4>>

A lithium secondary battery B4 was produced in the same manner as in Example 1 except that, in Formation of Spacer (4), a polyolefin resin was used in place of the alkyd resin.

### <<Comparative Example 5>>

A lithium secondary battery B5 was produced in the same manner as in Example 1 except that, in Formation of Spacer (4), poly(acrylic acid) (PAA) was used in place of the CMC.

### <<Comparative Example 6>>

A lithium secondary battery B5 was produced in the same manner as in Example 1 except that, in Formation of Spacer (4), polyvinyl pyrrolidone (PVP) was used in place of CMC.

Note that all of the CMC, the PAA, and the PVP are water-soluble and act as a thickener. The alkyd resin, the polyester resin, and the polyolefin resin, which were used as the binder resin, are not water-soluble, but are dispersible in water as fine particles.

### [Evaluation 1]

Before assembling each battery, the appearance of the spacer was observed with a microscope. A battery for which unevenness or cracking was observed in the separator was evaluated as "×", and a battery for which a homogeneous spacer was observed was evaluated as "o"

### [Evaluation 2]

Before assembling each battery, the structure of the spacer was observed with a scanning electron microscope (SEM). A battery for which a porous structure was observed was evaluated as "×", and a battery for which a dense non-porous structure was observed was evaluated as "∘".

### [Evaluation 3]

As described previously, the dispersion of the spacer material was applied to the surface of the separator to form a spacer material film, and a peel test was performed to measure the bonding strength between the spacer and the separator.

### [Evaluation 4]

As described previously, an image of a cross section of the spacer in the thickness direction of the separator was captured with a SEM, the thickness of the spacer was measured at arbitrarily selected 10 locations, and the thickness (height) of the spacer was determined as an average of the measured values.

The results obtained are shown in Table 1.

**[Table 1]**

| | Evaluation 1 Appearance | Evaluation 2 Structure | Evaluation 3 Bonding strength (N/m) | Evaluation 4 Thickness (µm) |
|---|---|---|---|---|
| Al | ○ | ○ | 21.3 | 40.7 |
| B1 | × | × | 1.2 | 24.5 |
| B2 | × | ○ | 6.6 | 13.7 |
| B3 | ○ | ○ | 14.4 | 32.3 |
| B4 | × | × | 6.6 | 37.6 |
| B5 | ○ | ○ | 6.6 | 28.6 |
| B6 | × | ○ | 5.7 | 14.9 |

For the battery A1, a spacer that was bound to the separator with a high bonding strength (21.3 N/m), and had a sufficient thickness (40.7 µm) was obtained. This confirmed a good compatibility between the alkyd resin and the CMC.

Further, in a constant-temperature bath at 25°C, a cycle of charging the battery A1 under the following conditions, followed by a rest period of 20 minutes, and discharging the battery A1 under the following conditions was repeated. As a result, a capacity retention rate of 90% or more was achieved even at the 50th cycle.

### (Charging)

Constant-current charging was performed at a current of 2.15 mA per unit area (square centimeter) of the electrode until the battery voltage reached 4.1 V, and thereafter constant-voltage charging was performed at a voltage of 4.1 V until the current value per unit area of the electrode reached 0.54 mA.

### (Discharging)

Constant-current discharging was performed at a current of 2.15 mA per unit area of the electrode until the battery voltage reached 3.75 V

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

A lithium secondary battery according to the present disclosure can be used for, for example, electronic devices such as a mobile phone, a smartphone, and a tablet terminal, electric vehicles including a hybrid vehicle and a plug-in hybrid vehicle, and a home storage battery combined with a solar cell.

### [Reference Signs List]

10: Lithium secondary battery
11: Positive electrode
12: Negative electrode
14: Electrode group
14s: Space
50: Separator
51: Substrate layer
50a, 50b: Principal surface
52: Composite material layer
53: Spacer
53a: Protrusion

## Claims

1. A lithium secondary battery comprising:
a positive electrode;
a negative electrode;
a porous separator disposed between the positive electrode and the negative electrode;
a spacer disposed between the separator and at least one of the positive electrode and the negative electrode; and
a non-aqueous electrolyte having lithium ion conductivity, wherein,
on the negative electrode, lithium metal is deposited during charging, and the lithium metal is dissolved during discharging,
the spacer includes insulating particles, a binder resin, and a thickener,
the insulating particles have a median diameter in a volume-based particle size distribution, of 1.0 µm to 10 µm,
the binder resin includes a polymer compound having a phthalic acid skeleton, and
the thickener includes at least one selected from the group consisting of carboxymethyl cellulose and a carboxymethyl cellulose salt.

2. The lithium secondary battery according to claim 1, wherein the spacer is bound to the separator.

3. The lithium secondary battery according to claim 2, wherein a bonding strength between the spacer and the separator is 20 N/m or more.

4. The lithium secondary battery according to claim 1, wherein the spacer has a thickness of 20 µm or more.

5. The lithium secondary battery according to claim 1, wherein the polymer compound is an alkyd resin.

6. The lithium secondary battery according to claim 5, wherein the alkyd resin has a weight-average molecular weight of 10,000 to 1,000,000.

7. The lithium secondary battery according to claim 1, wherein a content of the insulating particles in the spacer is less than 80 vol%.

8. The lithium secondary battery according to claim 1, wherein the spacer has a non-porous structure.

9. The lithium secondary battery according to claim 1, wherein with respect to a sum of a first region of the separator that faces the spacer and a second region of the separator that does not face the spacer, an area ratio of the first region is 30% or less.

10. The lithium secondary battery according to claim 1, wherein a shape in a plan view of the spacer is at least one of a shape of lines and a shape of dots that are arranged in a predetermined pattern.

11. The lithium secondary battery according to claim 1, wherein the pattern is a mesh pattern.

12. A spacer for a lithium secondary battery and a spacer material, the spacer and the spacer material comprising:
insulating particles; a binder resin; and a thickener, wherein
the insulating particles have a median diameter in a volume-based particle size distribution, of 1.0 µm to 10 µm,
the binder resin includes a polymer compound having a phthalic acid skeleton,
the thickener includes at least one selected from the group consisting of carboxymethyl cellulose and a carboxymethyl cellulose salt.

13. An integrated product of a separator and a spacer for a lithium secondary battery, the integrated product comprising:
the spacer according to claim 12; and a separator, wherein
the spacer is bound to a surface of the separator.
